(19) Europäisches Patentamt
European Patent Office
Office européen des brevets

(11) **EP 4 510 560 A1**

(12) **EUROPÄISCHE PATENTANMELDUNG**

(43) Veröffentlichungstag:
**19.02.2025 Patentblatt 2025/08**

(21) Anmeldenummer: **23192173.5**

(22) Anmeldetag: **18.08.2023**

(51) Internationale Patentklassifikation (IPC):
***H04N 13/39*** *(2018.01)*

(52) Gemeinsame Patentklassifikation (CPC):
**H04N 13/39**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Tormin, Andreas**
**79111 Freiburg (DE)**

(72) Erfinder:
• **Tormin, Andreas**
**79111 Freiburg (DE)**
• **Tormin, Carina**
**79111 Freiburg (DE)**
• **Zimmermann, Helmut R. W.**
**79232 March (DE)**

(74) Vertreter: **Mertzlufft-Paufler, Cornelius et al**
**Maucher Jenkins**
**Patent- und Rechtsanwälte**
**Urachstraße 23**
**79102 Freiburg im Breisgau (DE)**

(54) **VERFAHREN UND VORRICHTUNG ZUR RÄUMLICHEN DARSTELLUNG EINES GANZHEITLICH SICHTBAREN VOLUMENBILDES**

(57)     Verfahren und Vorrichtung zur räumlichen Darstellung eines ganzheitlich, momentan und sofort sichtbaren Volumenbildes (1) einer Szene (7), durch Variation der Lichtdichte in einem Darstellungsraum (3), wobei der Darstellungsraum (3) ein Darstellungsmedium aufweist, wobei die Variation der Lichtdichte durch Überlagerung von mehreren Lichtstrahlen (4) erzeugt wird und wobei die Lichtstrahlen (4) von wenigstens drei unterschiedlichen Ursprüngen (5) ausgehen.

Fig. 2

## Beschreibung

Die Erfindung beschreibt ein Verfahren und eine Vorrichtung zur räumlichen Darstellung eines ganzheitlich, momentan und sofort sichtbaren Volumenbildes einer Szene.

Es ist bekannt einen 3D-Effekt durch Stereoskopie zu erzeugen. Das bedeutet, dass zwei Bilder, die eine Szene aus leicht anderem Winkel zeigen, jeweils auf das entsprechende Auge projiziert werden und dadurch das Gehirn einen räumlichen Eindruck der Szene interpretiert.

Diese Bilder haben jedoch eine vorgegebene Perspektive auf die Szene. Eine Veränderung der Betrachtungsposition führt nicht zur Veränderung der Perspektive. Das 3D-Bild ändert sich also nicht in Abhängigkeit der Position des Betrachters.

Um eine positionsabhängige Veränderung des 3D-Bildes zu ermöglichen sind VR/AR-Brillen bekannt, die Positions-Tracking benutzen, um mit der Positionsinformation ständig neue Bilder zu errechnen, um den Eindruck von einem 3D Bild der Szene zu geben, das in 6-Freiheitsgraden betrachtbar ist. Dies erfordert jedoch einen großen technischen Aufwand und große Rechenleistung, was diese unhandlich und teuer macht.

Ein weiterer Nachteil dabei ist, dass immer nur eine Person pro Gerät das Bild komplett räumlich sehen kann. Jeder Betrachter muss daher eine eigene VR/AR-Brille tragen.

Im Gegensatz hierzu stehen Volumendisplays. Diese erzeugen ein räumliches Bild, wodurch jeglicher Aufwand wegfällt, das Bild dreidimensional erscheinen zu lassen, da es tatsächlich im Raum vorhanden ist.

Im Stand der Technik gibt es mehrere sogenannte "trappedparticle" Systeme, also Systeme, bei denen mit Schall oder Lasern Partikel unterschiedlicher Größe (Staubkorn/Styroporbällchen) in der Luft gefangen werden. Diese schwebenden Partikel können nun vom tragenden System frei in einem kleinen Raum bewegt werden, wobei diese, meist von einer gesteuerten Lichtquelle (LED) angestrahlt werden und durch Bewegungsunschärfe scheinbar im Raum Linien ziehen und somit Bilder zeichnen können. Diese Systeme bringen jedoch ebenfalls eine Reihe von Problemen mit sich. Einerseits sind sie durch ihre Komplexität auf kleine Darstellungsräume begrenzt, da bei größerer Skalierung es zunehmend schwieriger wird Partikel schweben zu lassen und zu kontrollieren. Des Weiteren folgt jedes physische Objekt und damit auch die gefangenen Partikel den Gesetzen der Trägheit, weswegen die gezeichneten Linien, je größer (also Partikel schneller) mehr und mehr Schwierigkeiten mit Ecken haben und deswegen hauptsächlich abgerundete Zeichnungen bevorzugt angezeigt werden. Zudem ist die Technik stark limitiert in der Anzahl von Partikeln, die suspendiert werden, was weiter die Bildgröße und Komplexität einschränkt. Des Weiteren ist die Programmierung der Volumenbilder aufwendig, da man kein Bild wie standardmäßig verbreitet aus Pixeln aufbaut, sondern in Linien zeichnet, also so, als sollte ein Roboterarm ein Portrait zeichnen, anstatt das gesamte Bild in kleine Teile aufzuteilen und diese simultan darzustellen. Dies ist vergleichbar mit der Art, wie ein Plotter auf einem Papier zeichnet.

Im Stand der Technik ist es außerdem bekannt, statt kleinen Partikeln beispielsweise eine semitransparente Platte in der Form und Größe des Darstellungsraumes durch den Darstellungsraum hindurch schnell auf und ab zubewegen und von unten mit einem Projektor zu belichten. Dabei bildet die Schnittkante der Platte eine beleuchtete Ebene oder Linie der Szene. Dadurch entsteht eine Querschnittebene des Volumenbildes und das Bild wird Schicht für Schicht aufgebaut, mehrmals pro Sekunde, wodurch es für das Auge wie ein gesamtes Volumenbild aussieht. Die Bilder der einzelnen Schichten sind dabei Schnittbilder der Szene, vergleichbar mit den Bildern eines Computertomographen. Auch hier bleibt jedoch das Problem bestehen, dass die Größe aufgrund der beweglichen Platte und der benötigten kompletten Durchquerung des Darstellungsraumes in kurzer Zeit stark limitiert wird. Das Volumenbild ist dabei zudem an die Platte gebunden.

Im Stand der Technik ist weiter ein Verfahren bekannt, bei dem fliegende Lichtpunkte durch Laser-Interferenz erzeugt werden. Dabei wird die Luft ionisiert und somit ein winziger greifbarer Lichtpunkt erzeugt, wobei jedoch immer nur ein paar Lichtpunkte gleichzeitig darstellbar sind.

Aufgabe der Erfindung ist es, die räumliche Darstellung einer Szene zu verbessern.

Die Aufgabe der Erfindung wird durch ein Verfahren mit den Merkmalen des Anspruch 1 und eine Vorrichtung mit den Merkmalen des Anspruch 12 gelöst.

Demnach erfolgt erfindungsgemäß eine Variation der Lichtdichte in einem Darstellungsraum, wobei der Darstellungsraum ein, vorzugsweise semitransparentes, Darstellungsmedium aufweist. Die Variation der Lichtdichte wird durch Überlagerung von mehreren Lichtstrahlen erzeugt, wobei die Lichtstrahlen von wenigstens drei unterschiedlichen Ursprüngen ausgehen.

Der Begriff Lichtstrahl kann generell im Kontext der Anmeldung als Vereinfachung verstanden werden. Der Begriff Lichtstrahl ist nicht auf einen einzelnen, dünnen Lichtstrahl begrenzt. Genauer kann ein Lichtstrahl ein Bündel von mehreren divergierenden Lichtstrahlen sein. Der Lichtstrahl besitzt somit einen Öffnungswinkel und einen endlichen Durchmesser. Wo immer im Folgenden der Begriff Lichtstrahl verwendet wird, ist auch ein solches divergierendes Bündel aus Lichtstrahlen oder ein Lichtbündel gemeint.

Das Verfahren funktioniert also durch Überlagerung von Lichtstrahlen, vorzugsweise aus verschiedenen Richtungen, im Raum, wodurch Teilvolumen mit optisch hellerer Intensität entstehen. Das Bild entsteht im Wesentlichen auf eine analoge Weise. Zur Darstellung sind insbesondere keine Voxel notwendig, der Darstellungsraum muss also nicht in einzelne Bereiche unterteilt sein. Im Gegensatz zum Stand der Technik erzeugt die Erfindung ein Volumenbild, das nicht auf einem festen, sich für das Auge unkenntlich schnell bewegenden, Projektionsmedium entsteht, sondern im Wesentlichen frei im Darstellungsraum. Ein besonderer Vorteil besteht dabei darin, dass das Volumenbild, je nach Darstellungsmedium, anfassbar und durchgreifbar ist. Beispielsweise kann das Volumenbild frei in der Luft schweben und kann dort auch persistent, also nicht nur für eine kurze Zeit sichtbar, sein.

Zudem ist dieses greifbare Volumenbild nicht in Komplexität und/oder Größe eingeschränkt. Das Volumenbild entsteht außerdem gleichzeitig, also als Ganzes, wodurch auch Bewegtbilder darstellbar sind. Ein weiterer Vorteil besteht darin, dass das System keine aufwendigen Lichtquellen benötigt, etwa starke Laser oder vergleichbare Lichtquellen, die dem menschlichen Auge schaden könnten, oder aufwendige Kühlsysteme benötigen.

Ein weiterer Vorteil besteht darin, dass das Volumenbild redundant oder tolerant gegenüber Fremdkörpern im Bild ist. Das bedeutet, dass das Volumenbild durch Anfassen, Durchgreifen, oder durch andere Fremdkörper zwar lokal gestört, aber nur selten ganz zerstört oder unkenntlich wird, etwa wenn der Fremdkörper größer als das Volumenbild ist.

Ein weiterer Vorteil besteht darin, dass die Form und Einpassung des Darstellungsraumes vielseitig sind. Der Darstellungsraum kann in unmittelbarer Umgebung von Objekten platziert und/oder in diese integriert werden. Prinzipiell kann gesagt werden, dass der Darstellungsraum lediglich eine Definition ist und einen Bereich, beziehungsweise ein Volumen umschreibt, in den Lichtstrahlen aus den Ursprüngen projiziert werden können. Ein Darstellungsraum kann vollständig, oder nur teilweise mit einem Darstellungsmedium gefüllt sein.

In einer Ausführung wird zum Erzeugen der Variation der Lichtdichte aus wenigstens drei unterschiedlichen Posen jeweils ein Emissionsmuster in den Darstellungsraum projiziert, so dass sich einzelne Lichtstrahlen der Emissionsmuster im Darstellungsraum überlagern und an Stellen der Überlagerung eine relativ höhere Lichtdichte erzeugen.

Eine Pose umfasst dabei die Position des optischen Ursprungs, also aus der eine Projektion erfolgt und die Projektionsrichtung. Die Pose beinhaltet vorzugsweise zusätzlich einen Projektionslichtkegel, also den Öffnungswinkel und die Richtung eines aus einem Emissionsmuster resultierenden Lichtkegels.

Der Aufbau des Volumenbildes funktioniert durch Überlagerung von Lichtstrahlen ähnlich einem Fadenbild, bei dem durch Kreuzung und Annäherung von Fäden hellere und dunklere Bereiche entstehen. Analog dazu entstehen bei der Überlagerung von Lichtstrahlen im dunklen Raum invers analoge Kontraste. Das Volumenbild ist also eine Überlagerung der Kontraste oder Intensitäten der Lichtstrahlen.

Ein Emissionsmuster umfasst immer eine an die Pose angepasste Intensitätsverteilung der darzustellenden Szene. Das Emissionsmuster ist damit die zweidimensionale Intensitätsverteilung der Szene, wie sie aus der Perspektive der Pose erscheint.

Beim erfindungsgemäßen Verfahren werden ausschließlich Eigenschaften der Strahlenoptik ausgenutzt. Das bedeutet, dass andere optische Eigenschaften wie Kohärenz und Interferenz nicht berücksichtigt und nicht ausgenutzt werden. Die Variation der Lichtdichte wird also ausschließlich durch einfache Addition der Intensität einzelner Lichtstrahlen erzielt und nicht etwa durch konstruktive oder destruktive Interferenzen.

Der Vorteil dabei besteht darin, dass die erfindungsgemäße Überlagerung der Lichtstrahlen ein rein analoges Verfahren ist. Die Umsetzung des Verfahrens kann mit analoger oder auch durch digitale Technik oder einer Mischung aus analoger und digitaler Technik erfolgen.

Somit können als Projektionslichtquelle nahezu alle Lichtquellen verwendet werden. Das Emissionsmuster kann dabei durch Variieren der Intensität und wechselnder Ausrichtung der Projektionslichtquelle oder durch eine Maske, durch die die Projektionslichtquelle hindurchstrahlt, erfolgen.

Eine nicht abschließende Liste von Beispielen für Projektionslichtquellen umfasst Laser, Bildwerfer, Diaprojektoren, Videoprojektoren, Halogenlampen und Leuchtdioden.

In einer Ausführung weist die Überlagerung der Lichtstrahlen im Darstellungsraum eine Intensitätsverteilung auf, die im Wesentlichen die Intensitätsverteilung der Szene widerspiegelt. Auf diese Weise wird ein Volumenbild erzielt, das insgesamt die Szene wiedergibt.

Verfahrensbedingt gibt es im Volumenbild keine perfekt scharfen Lichtkanten, sondern immer einen gewissen Übergangsbereich. Dieser kann für das Auge unmerklich sein und durch Kompensationen im Emissionsmuster und durch Benutzung mehrerer Posen minimiert, jedoch nicht vermieden werden. Weiter ist es verfahrensbedingt nur möglich, Volumen darzustellen. Flächen, Hüllen, oder andere Formen können nur dargestellt werden, wenn diese eine gewisse Dicke aufweisen. Da die Darstellung auf Volumen beruht, ist es notwendig Flächen, oder Hohlkörpern, eine Wandstärke zu geben, um sie sichtbar darstellen zu können.

In einer Ausführung ist pro Volumenbild jeder Pose ein Emissionsmuster zugeordnet. Dieses Emissionsmuster kann fest vorgegeben sein, etwa in einer festen Maske oder einem Dia. Das Emissionsmuster kann aber auch dynamisch erzeugt werden. Auf diese Weise ist es möglich, unterschiedliche Szenen darzustellen. Zudem können auf diese Weise auch bewegte Szenen als Animation dargestellt werden.

Hierzu ist es insbesondere vorteilhaft, wenn für jede Pose ein Emissionsmuster erstellt wird.

In einer Ausführung wird zur Erstellung eines Emissionsmusters für jeden emittierten Lichtstrahl des Emissionsmusters eine Intensität berechnet, so dass die Überlagerung der einzelnen Lichtstrahlen resultierend aus den Emissionsmustern aller Posen der Intensitätsverteilung der Szene entspricht. Zur Erstellung eines Emissionsmusters wird ein Lichtstrahl entsprechend der Pose des zu erzeugenden Emissionsmusters vom Ursprung ausgehend in die Szene hinein verfolgt.

In einer Ausführung werden zur Erstellung eines Emissionsmusters die möglichen Lichtstrahlen, welche aus einer Pose resultieren können, betrachtet und für jeden solchen Lichtstrahl eine Intensität berechnet, so dass die Überlagerung der einzelnen Lichtstrahlen der Emissionsmuster aller Posen der Intensitätsverteilung der Szene entspricht und diese Intensitäts-Informationen in einem zweidimensionalen Muster gespeichert werden können.

Wie bereits erwähnt, ist der Lichtstrahl eher ein divergierendes Bündel aus Lichtstrahlen. Dieses Bündel schneidet das Volumen von Objekten der Szene, wobei ein oder mehrere Schnittvolumen gebildet werden. Die Intensitäten dieser Schnittvolumen werden aufsummiert oder integriert, wodurch eine Gesamtintensität für diesen Lichtstrahl bestimmt wird. Hierzu können Verstärkungsfaktoren und weitere Korrekturfaktoren berücksichtigt werden. Eine Szene und ihre Objekte können zur Berechnung beispielsweise als Polygonnetze, geometrisch oder als Volumenkörper beschrieben werden.

In einer Ausführung kann es von Vorteil sein, zur Erstellung eines Emissionsmusters, das zu erstellende Emissionsmuster in eine endliche Anzahl einzelner Bildpunkte zu unterteilen und jedem Bildpunkt einen Lichtstrahl zuzuordnen. Vorteilhaft ist dabei, dass nicht die Szene in einzelne Bildbereiche, etwa Voxel, unterteilt werden muss. Die Berechnung geht, wie oben beschrieben, von Lichtstrahlen und deren Überlagerung aus, wodurch der analoge Charakter des erfindungsgemäßen Verfahrens verdeutlicht wird.

Beispielsweise kann bei der Verwendung eines Videoprojektors als Projektionslichtquelle das Emissionsmuster in die native Auflösung des Videoprojektors unterteilt werden. Jeder vom Videoprojektor darzustellende Bildpunkt entspricht somit einem Bildpunkt des Emissionsmusters und einem Lichtstrahl. Zur Berechnung der Intensität eines solchen Lichtstrahls kann dann beispielsweise ausgehend vom optischen Ursprung der Projektionslichtquelle ein Lichtstrahl durch einen Bildpunkt des Emissionsmusters gelegt werden. Es wird anschließend bestimmt, wo und wie viel der Szene der Lichtstrahl schneidet. Je mehr Schnittvolumen der Lichtstrahl mit der Szene aus dieser Pose besitzt, desto größer ist seine Intensität im zu erstellenden Emissionsmuster.

Eine Projektionslichtquelle kann auch ein richtungsbeweglicher kontinuierlicher Lichtstrahl mit festem Ursprung sein, etwa ein Laser, der sich durch die belichteten Teile des Emissionsmusters bewegt und durch Veränderung seiner Intensität oder Geschwindigkeit, also Belichtungsdauer, das Emissionsmuster darstellt.

Alternativ oder zusätzlich kann die Szene auch als Punktwolke betrachtet werden und ein Emissionsmuster über die Summe der Intensitäten der von den Lichtstrahlen abgedeckten Volumenbildpunkten erzeugt und berechnet werden.

Vorzugsweise wird zur Berechnung der Intensität eines Lichtstrahls ein Integral der Intensitäten, über die vom Lichtstrahl belichteten Bereiche der Szene und den entsprechenden Intensitäten entlang des Lichtpfades gebildet.

In einer Ausführung erfolgt bei der Berechnung der Intensität eines Lichtstrahls eine Tiefenkompensation. Dadurch kann bei sehr großen Darstellungsräumen der Abfall der Intensität mit zunehmender Entfernung berücksichtigt werden. Dies kann beispielsweise durch einen Korrekturfaktor oder eine Korrekturfunktion erfolgen. Beispielsweise ist der Abfall der Intensität quadratisch abhängig von der Distanz. Eine Korrekturfunktion kann dies beispielsweise berücksichtigen. Weiterhin kann beispielsweise eine Überbelichtungskorrektur erfolgen.

In einer Ausführung wird zur Berechnung der Intensität für jeden Lichtstrahl die Distanz der Lichtquelle zum weit entferntesten Punkt des Lichtstrahls im Darstellungsraum, die Intensität des Volumenbildpunktes, oder des Schnittvolumens im Darstellungsraum, die Distanz des Volumenbildpunktes, oder des Schnittvolumens zur Lichtquelle, und/oder eine optische Eigenschaft des Darstellungsmediums, beispielsweise die Absorption oder der Brechungsindex, berücksichtigt. Auf diese Weise kann eine genaue Intensität berechnet werden, um ein Emissionsmuster zu erstellen.

Wie bereits oben erwähnt, kann das Verfahren auch zur Darstellung einer bewegten Szene verwendet werden. Hierzu kann die Erzeugung der Emissionsmuster dynamisch durchgeführt werden.

In einer Ausführung ist jeder Pose eine Projektionslichtquelle zugeordnet. Auf diese Weise ist eine einfache Zuordnung eines Emissionsmusters zur Pose möglich.

Dabei kann die Projektionslichtquelle in der Pose angeordnet sein. Das bedeutet, dass eine Projektionslichtquelle fest in einer Pose angeordnet ist und dort verbleibt. Der optische Ursprung der Projektionslichtquelle nimmt hierbei die Position des Ursprungs der Pose ein.

Eine Projektionslichtquelle kann aber auch in eine Pose bewegbar sein. Hierzu kann die Projektionslichtquelle beweglich gelagert oder angeordnet sein. Auf diese Weise kann eine physikalisch vorhandene, oder reale Projektionslichtquelle mehrere Posen einnehmen. Auch kann eine Pose von mehreren realen Projektionslichtquellen eingenommen werden. An der Position, in die eine Lichtquelle bewegt wird, entsteht somit eine virtuelle Projektionslichtquelle mit dieser Pose. Anders ausgedrückt, kann die Pose als virtuelle Projektionslichtquelle betrachtet werden. Eine solche virtuelle Projektionslichtquelle ist im Sinne der Erfindung gleichwertig zu einer physikalischen oder realen Lichtquelle. Sofern im Folgenden eine virtuelle Projektionslichtquelle nicht explizit genannt ist, kann anstelle einer Lichtquelle immer auch eine solche virtuelle Projektionslichtquelle eingesetzt sein.

Eine virtuelle Projektionslichtquelle kann auch durch einen oder mehrere Spiegel simuliert werden, die das Licht einer realen Projektionslichtquelle reflektieren. Durch die Pose des Spiegels kann die Pose der virtuellen Projektionslichtquelle definiert werden. Die eigentliche Projektionslichtquelle kann dabei räumlich fest an einem anderen Ort angeordnet oder beweglich sein.

Durch bewegliche, oder teilende optische Elemente, beispielsweise Formspiegel, Prismen oder rotierende Spiegel, können mit einer Projektionslichtquelle auch mehrere, wenigstens zwei, virtuelle Projektionslichtquellen, also Posen, aus einer feststehenden Projektionslichtquelle erzeugt, beziehungsweise simuliert werden. Selbstverständlich können feststehende und bewegliche Spiegel auch mit bewegten Projektionslichtquellen kombiniert werden. Prinzipiell ist eine beliebige Kombination aus verschiedenen Projektionslichtquellen möglich.

Für eine erfindungsgemäße Volumendarstellung sind mindestens drei verschiedene Posen notwendig. Diese können durch reale Projektionslichtquellen und/oder virtuelle Projektionslichtquellen gebildet sein. Hierbei ist auch eine beliebige Kombination aus realen und virtuellen Projektionslichtquellen möglich.

Prinzipiell ist es möglich, ein Volumenbild in einen beliebigen Raum zu projizieren.

Erfindungsgemäß weist der Darstellungsraum ein Darstellungsmedium auf. Beispielsweise kann ein Darstellungsraum mit dem Darstellungsmedium gefüllt sein. Wie oben bereits erwähnt, muss der Darstellungsraum jedoch kein abgeschlossener Raum sein. Das Darstellungsmedium kann auch ohne Begrenzung in einem umgebenden Raum angeordnet sein.

In einer Ausführung ist das Darstellungsmedium zur Reflexion und/oder Streuung von Lichtstrahlen ausgebildet. Auf diese Weise sind die Lichtstrahlen und somit das Volumenbild im Darstellungsraum sichtbar.

Hierbei kann es vorteilhaft sein, wenn das Darstellungsmedium reflektive und/oder refraktive Eigenschaften aufweist. Somit werden die Lichtstrahlen gestreut und das Volumenbild ist sichtbar.

Insbesondere ist es vorteilhaft, wenn die reflektiven und/oder refraktiven Eigenschaften des Darstellungsmediums isotrop sind, also in allen Raumrichtungen gleich sind. Somit ist das Volumenbild aus allen Betrachtungsrichtungen gleichmäßig sichtbar.

In einer Ausführung weist das Darstellungsmedium reflektive und/oder refraktive Partikel auf.

Vorzugsweise ist das Darstellungsmedium eine Dispersion, insbesondere ein Aerosol, eine Emulsion oder Suspension.

Das Darstellungsmedium kann etwa flüssig oder gasförmig sein, beispielsweise ein Nebel oder Rauch. Der Nebel kann durch Kälte und/oder Verdunstung/Sublimation entstehen, etwa durch gefrorenes Kohlendioxid (Trockeneis).

Der Darstellungsraum kann auch mehr als ein Darstellungsmedium aufweisen, wobei verschiedene Darstellungsmedien beliebig kombinierbar sind.

Ein großer Vorteil der Erfindung ist daher, vor allem bei gasförmigen und flüssigen Darstellungsmedien, die Möglichkeit des An- beziehungsweise Durchfassens des Volumenbildes, da es im Darstellungsmedium frei schwebt. Ein Betrachter kann in das Bild hineingreifen, um das Volumenbild herumlaufen oder sogar, je nach Größe, in das Volumenbild hineinlaufen.

Der Darstellungsraum kann frei in einem umgebenden Raum ausgebildet sein. Dadurch kann das Volumenbild beispielsweise frei im Raum schweben. Ein Betrachter kann ein solches Volumenbild direkt erleben, also greifen, hindurchgehen oder sich im Volumenbild aufhalten.

Der Darstellungsraum kann jedoch auch als begrenztes Volumen ausgebildet sein. Somit ist es möglich ein Volumenbild etwa in einem mit dem Darstellungsmedium gefüllten Glasschaukasten oder etwa in einem Aquarium zu erzeugen. Alternativ kann der Darstellungsraum auch durch das Darstellungsmedium gebildet sein. Etwa wenn das Darstellungsmedium ein Festkörper, beispielsweise aus Glas bestehend, ist. In diesem Glas können beispielsweise refraktive und/oder reflektive Partikel eingelagert sein.

Dabei ist die Größe des Darstellungsraumes nicht beschränkt. Das erfindungsgemäße Verfahren kann für Darstellungsräume im Zentimeter-Bereich bis hin zu einigen Metern eingesetzt werden. Dabei ist allenfalls die Intensität und/oder die Anzahl und Art der notwendigen Projektionslichtquellen limitierend.

Wie bereits erwähnt ist das erfindungsgemäße Verfahren ein analoges Verfahren, weshalb die Art der Projektionslichtquelle keine Rolle spielt. Die Projektionslichtquelle muss jedoch in der Lage sein ein Emissionsmuster zu projizieren.

Eine Projektionslichtquelle kann eine gerichtete, vorzugsweise bewegliche und/oder intensitätsveränderliche Lichtquelle sein, etwa ein Laser. Auf diese Weise ist jeder Lichtstrahl eines Emissionsmusters direkt durch die Projektionslichtquelle erzeugbar. Wichtig hierbei ist, dass nicht die Eigenschaften der Kohärenz und Interferenz eines Lasers ausgenutzt werden. Die Intensitäten der einzelnen Laser-Lichtstrahlen werden klassisch addiert.

Eine Projektionslichtquelle kann aber auch eine Lichtquelle und eine Bildmaske aufweisen. Die Bildmaske enthält dabei das Emissionsmuster. Die Bildmaske kann hier von der Lichtquelle durchstrahlt werden, wie beispielsweise bei einem Diaprojektor oder LCD-Videoprojektor. Als Bildmaske können jedoch auch andere Masken eingesetzt werden, etwa Metall- oder Kunststoffflächen mit unterschiedlich großen Öffnungen oder Transparenzen zum Durchstrahlen. Auch Bildmasken durch Umlenkung des Lichts wie beispielsweise bei DLP-Videoprojektoren sind möglich, sowie andere Formen von Bildmasken sind denkbar.

Imperfektionen der Bildmasken oder Emissionsmuster, sowie Streustrahlung im Darstellungsraum, stören zwar das Bild, vor allem bei Verwendung ausreichend vieler Projektionslichtquellen, kann das Bild jedoch immer noch erkennbar sein.

Eine Projektionslichtquelle kann auch ein reflektives Element, vorzugsweise einen Spiegel, aufweisen, durch den das Licht einer Lichtquelle abgelenkt werden kann.

Eine Projektionslichtquelle kann auch zur Änderung der Pose ausgebildet sein. Somit ist es möglich, mit wenigen realen Projektionslichtquellen ein Volumenbild aus mehreren Posen zu projizieren, wodurch die räumliche Auflösung verbessert werden kann.

Insbesondere kann eine oder mehrere Projektionslichtquellen um einen Darstellungsraum rotiert werden.

Die Erfindung umfasst auch eine Vorrichtung zur Projektion eines ganzheitlich sichtbaren, momentanen Volumenbildes einer Szene. Diese Vorrichtung kann insbesondere zur Durchführung eines erfindungsgemäßen Verfahrens ausgebildet sein.

Die erfindungsgemäße Vorrichtung umfasst einen Darstellungsraum, der ein Darstellungsmedium aufweist, wenigstens drei Projektionslichtquellen, die um oder am Darstellungsraum, insbesondere gleichmäßig verteilt, angeordnet sind, und auf den Darstellungsraum ausgerichtet sind, wobei jeder Projektionslichtquelle mindestens eine Pose zugeordnet ist. Auf diese Weise kann innerhalb des Darstellungsraumes ein Volumenbild erzeugt werden. Hierbei kann eine Projektionslichtquelle, wie bereits oben erwähnt, auch eine virtuelle Projektionslichtquelle sein. Das bedeutet, dass eine reale Projektionslichtquelle etwa in mehrere Posen bewegt wird oder über Spiegel mehrere Posen gebildet werden und jede Pose wie eine Projektionslichtquelle wirkt. Im Folgenden ist mit Projektionslichtquelle daher immer auch virtuelle Projektionslichtquelle gemeint, auch wenn dies nicht explizit erwähnt ist.

Die Projektionslichtquellen können praktisch beliebig angeordnet sein. Der Darstellungsraum wird dabei gebildet durch die überlappenden Projektionslichtkegel einzelner Projektionslichtquellen. Der Darstellungsraum ist also definiert als der Bereich, der wenigstens von mehreren Projektionslichtquellen ausleuchtbar ist oder der Bereich, in dem sich wenigstens mehrere Projektionslichtkegel überschneiden. Ein Projektionslichtkegel ist dabei der von einer Projektionslichtquelle ausgeleuchtete, beziehungsweise ausleuchtbare Bereich.

Der Darstellungsraum kann ebenfalls definiert werden, als der Bereich in dem das Volumenbild, beziehungsweise die Szene, sichtbar wird.

In einer Ausführung sind die Projektionslichtquellen kreisförmig in einer Ebene oder mehreren Ebenen, kugelförmig oder halbkugelförmig um den Darstellungsraum, in einer oder mehreren Schichten, angeordnet. Dabei ist es vorteilhaft, wenn die Projektionsrichtungen aller Projektionslichtquellen auf einen gemeinsamen Punkt ausgerichtet sind.

In einer alternativen Ausführung sind die Projektionslichtquellen linear oder in einer Fläche angeordnet und besitzen jeweils dieselbe Projektionsrichtung.

Die Vorrichtung weist vorzugsweise mehr als 20 Projektionslichtquellen, besonders vorzugsweise mehr als 60 Projektionslichtquellen auf.

Diverse Projektionsrichtungen schärfen das Volumenbild, wobei tangential zu flächigen Teilen des Volumenbildes verlaufende Projektionsrichtungen besonders effektiv sind. Somit lässt sich sagen, dass je mehr Projektionslichtquellen, vorzugsweise gleichmäßig im Raum verteilt, vorhanden sind, desto schärfer ist ein Volumenbild darstellbar. Die Art der Positionierung überwiegt jedoch in der Effektivität gegenüber der reinen Anzahl an Projektionslichtquellen.

Alternativ kann eine oder mehrere der Projektionslichtquellen zur Einnahme verschiedener Posen ausgebildet sein. Auf diese Weise kann ein Volumenbild mit weniger realen Projektionslichtquellen projiziert werden.

Eine Projektionslichtquelle ist eine gerichtete, vorzugsweise intensitätsveränderliche Lichtquelle. Eine Projektionslichtquelle kann beispielsweise ein Laser sein, oder kann eine Punktlichtquelle und eine Bildmaske aufweisen, beispielsweise ein Diaprojektor oder Videoprojektor. Sie kann ein reflektives Element, vorzugsweise einen Spiegel, oder mehrere solcher reflektiven Elemente zur Änderung der Pose oder Simulierung neuer virtueller Posen aufweisen und/oder durch Bewegung zur Änderung der Pose ausgebildet sein.

Eine Projektionslichtquelle zeichnet sich durch die Fähigkeit aus, ein Emissionsmuster zu projizieren, also gezielt die Lichtintensität von Lichtstrahlen, ausgehend von einem Ursprung aus, zu modulieren, abhängig von den Richtungsvektoren der emittierten Lichtstrahlen.

Prinzipiell können auch verschiedene Arten von Projektionslichtquellen, reale und virtuelle, miteinander beliebig kombiniert werden, beispielsweise ein Videoprojektor mit einem oder mehreren Lasern.

Die Erfindung ist nachfolgend mit Bezug auf die beiliegenden Zeichnungen näher erläutert.

Es zeigt:

Fig. 1      eine simulierte Schrägdarstellung eines erfindungsgemäßen Volumenbildes,

Fig. 2      eine invertierte Darstellung der Fig. 1 zur besseren Übersicht,

Fig. 3      eine teilweise simulierte Darstellung eines erfindungsgemäßen Volumenbildes mit drei Projektionslichtquellen,

Fig. 4      eine invertierte Darstellung der Fig. 3 zur besseren Übersicht,

Fig. 5 eine schematische Darstellung eines Lichtstrahles bei der Durchquerung einer Szene zur Verdeutlichung der Berechnung der Intensität des Lichtstrahles,

Fig. 6 eine schematische Darstellung eines Volumenbildes mit drei Projektionslichtquellen und den zugehörenden Emissionsmustern,

Fig. 7 eine Schrägansicht einer Vorrichtung zur Projektion eines Volumenbildes mit vielen Projektionslichtquellen in einer ebenen, kreisförmigen Anordnung mit zum Kreismittelpunkt gerichteter Projektionsrichtung und einer schematischen Darstellung eines Volumenbildes einer Beispielszene,

Fig. 8 eine Seitenansicht der Vorrichtung der Fig. 7,

Fig. 9 eine Draufsicht der Vorrichtung der Fig. 7,

Fig. 10 eine Schrägansicht einer Vorrichtung zur Projektion eines Volumenbildes mit vielen Projektionslichtquellen in einer ebenen, kreisförmigen Anordnung mit radial nach innen und schräg nach oben gerichteter Projektionsrichtung

Fig. 11 eine Schrägansicht einer Vorrichtung zur Projektion eines Volumenbildes mit vielen Projektionslichtquellen in zwei voneinander beabstandeten, kreisförmigen Anordnungen mit radial nach innen und schräg aufeinander zugerichteten Projektionsrichtungen,

Fig. 12 eine Seitenansicht der Vorrichtung der Fig. 11,

Fig. 13 eine Schrägansicht einer Vorrichtung zur Projektion eines Volumenbildes mit vielen Projektionslichtquellen in einer Anordnung als Dodekaeder mit zum Kugelmittelpunkt gerichteten Projektionsrichtungen,

Fig. 14 eine Draufsicht der Vorrichtung der Fig. 13,

Fig. 15 eine Schrägansicht einer Vorrichtung zur Projektion eines Volumenbildes mit vielen Projektionslichtquellen in einer halbkugelförmigen Anordnung um einen im Kugelmittelpunkt angeordneten festen Darstellungsraum mit zum Darstellungsraum gerichteten Projektionsrichtungen,

Fig. 16 eine Draufsicht der Vorrichtung der Fig. 15,

Fig. 17 eine Seitenansicht einer Vorrichtung zur Projektion eines Volumenbildes mit ebener Anordnung der Ursprünge und schematischer Darstellung der entsprechenden Projektionslichtkegel zur Verdeutlichung der Bildung eines Darstellungsraumes,

Fig. 18 eine Schrägansicht einer Vorrichtung zur Projektion eines Volumenbildes mit vielen Projektionslichtquellen in einer ebenen Anordnung mit nach oben gerichteten Projektionsrichtungen,

Fig. 19 eine Schrägansicht einer Vorrichtung zur Projektion eines Volumenbildes mit drei Projektionslichtquellen in einer ebenen, kreisförmigen Anordnung mit zum Kreismittelpunkt gerichteten Projektionsrichtungen auf einem Drehgestell,

Fig. 20 die Vorrichtung der Fig. 19 mit angedeuteten virtuellen Projektionslichtquellen,

Fig. 21 eine Schrägansicht einer Vorrichtung zur Projektion eines Volumenbildes mit drei Projektionslichtquellen gemäß der Fig. 19, mit einem zusätzlichen, feststehenden Ring mit mehreren Blendenöffnungen,

Fig. 22 eine Draufsicht einer Vorrichtung zur Projektion eines Volumenbildes mit einer Projektionslichtquelle und mehreren kreisförmig angeordneten Spiegeln, und

Fig. 23 eine Seitenansicht der Vorrichtung der Fig. 22.

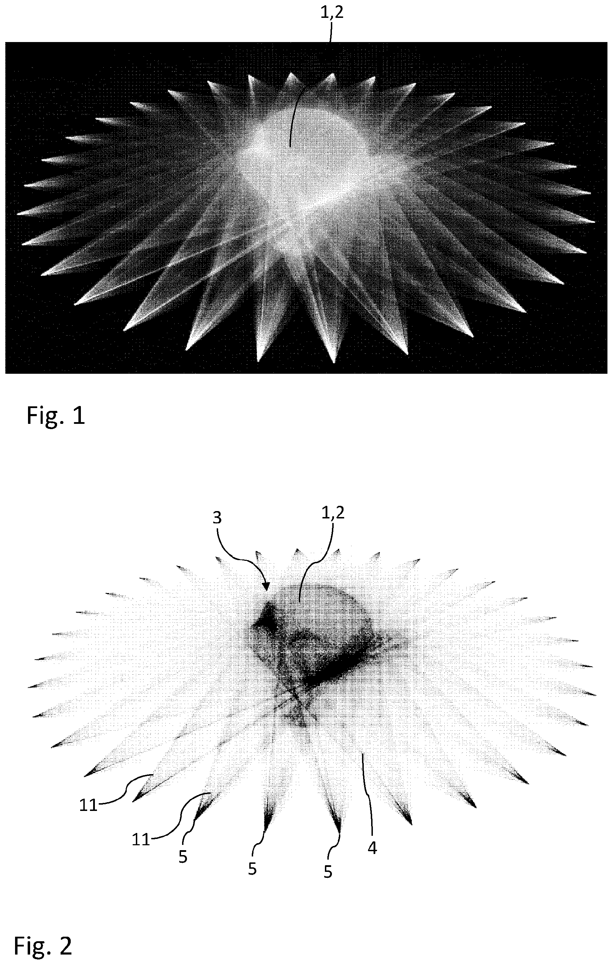

Die Fig. 1 zeigt eine simulierte Darstellung eines Volumenbildes 1, das mit einem erfindungsgemäßen Verfahren erstellt wurde.

Die Fig. 2 zeigt eine invertierte Darstellung der Fig. 1 zur besseren Übersicht.

Das Volumenbild 1 ist ein ganzheitlich sichtbares, momentanes Abbild einer Szene 7. Eine Szene 7 kann ein beliebiges dreidimensionales Objekt 6 oder eine Anordnung mehrerer Objekte 6 sein. Die Szene 7 im Beispiel ist der bekannte Affenkopf 2 Suzanne, der mit freundlicher Genehmigung durch blender.org verwendet wird. Für das Beispiel wurde der Affenkopf 2 modifiziert, so dass er hohl ist. Ein Hohlkörper ist besser zur Erläuterung der Erfindung geeignet. Wie bereits oben beschrieben, ist jedoch ein Volumen zur Darstellung notwendig, weshalb der Affenkopf 2 dicke Wände besitzt, die ein Volumen bilden.

Das Volumenbild 1 entsteht durch Variation der Lichtdichte in einem Darstellungsraum 3, wobei die Variation der Lichtdichte durch Überlagerung von mehreren Lichtstrahlen 4 erzeugt wird. In der Regel sind Lichtstrahlen 4 nicht ideal linienförmig. Vielmehr können Lichtstrahlen 4 in der Praxis eher als divergierende Lichtbündel beschrieben werden. Im Sinne der Erfindung ist daher mit Lichtstrahl 4 auch immer ein solches Lichtbündel gemeint, auch wenn es nicht explizit erwähnt ist. Dort, wo sich viele Lichtstrahlen 4 oder Lichtbündel kreuzen, ist das Volumenbild 1 heller als an Stellen, wo sich weniger oder keine Lichtstrahlen 4 kreuzen. Die Überlagerung findet daher additiv im Sinne der Helligkeit oder Intensität der Lichtstrahlen 4 statt und erhöht somit im Bereich der Überlagerung die Lichtdichte, also die Lichtintensität pro Volumen, im Raum.

Hingegen spielen Effekte wie Kohärenz und Interferenz keine Rolle. Die Lichtstrahlen 4 sind also im Sinne der Strahlenoptik zu verstehen.

Demnach kann es vorteilhaft sein, wenn der Darstellungsraum 3 dunkel oder zumindest abgedunkelt von Umgebungslicht ist, so dass die projizierten Lichtstrahlen 4 besser sichtbar sind und einen Kontrast zum restlichen Darstellungsraum 3 bilden.

Die Lichtstrahlen 4 gehen im Beispiel von mehreren Ursprüngen 5 aus, die kreisförmig in einer Ebene angeordnet sind. Innerhalb dieses Kreises liegt der Darstellungsraum 3.

Die Lichtstrahlen 4 eines Ursprungs 5 bilden ein Emissionsmuster 13. Dieses Emissionsmuster 13 ist spezifisch für jede Pose 15 und spiegelt die Intensitätsverteilung der einzelnen Lichtstrahlen 4 im entsprechenden Projektionslichtkegel 11 wider. Die Emissionsmuster 13 der einzelnen Ursprünge 5 sind so ausgebildet, dass im Darstellungsraum 3 durch die Überlagerung aller Lichtstrahlen 4 die Intensitätsverteilung der Szene 7 möglichst genau wiedergegeben wird.

Der Darstellungsraum 3 weist ein Darstellungsmedium auf, beispielsweise einen Nebel. Durch dieses Darstellungsmedium sind die Lichtstrahlen 4 im Darstellungsraum 3 und somit das Volumenbild 1 sichtbar. In der Simulation des Beispiels ist ein isotroper Nebel verwendet, so dass die Darstellung im gesamten Darstellungsraum 3 gleichmäßig erfolgt.

Wenn im Folgenden nicht explizit eine andere Form von Darstellungsmedium genannt oder gezeigt wird, kann davon ausgegangen werden, dass eine Vorrichtung 9 einen Nebel als Darstellungsmedium verwendet.

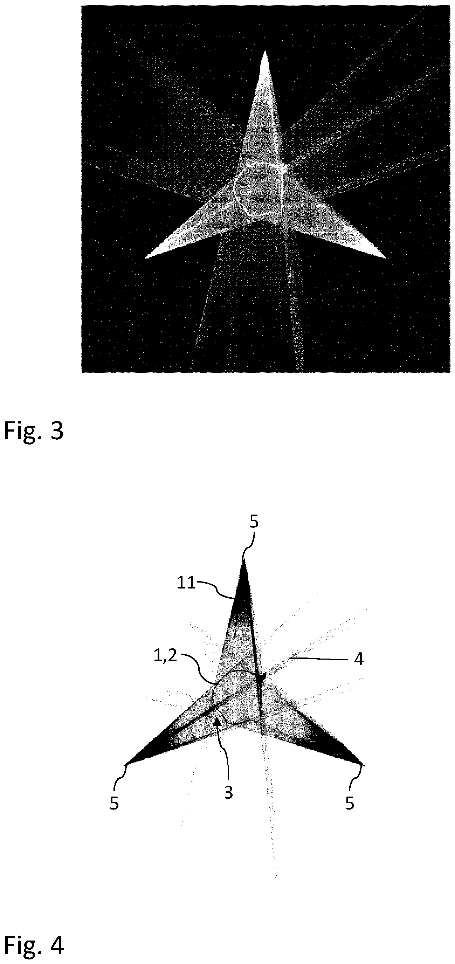

Die Fig. 3 und 4 zeigen zur Verdeutlichung der Intensitätsverteilung der Lichtstrahlen 4 in den Projektionslichtkegeln 11 des Verfahrens eine vereinfachte Darstellung eines Volumenbildes 1 als Draufsicht, mit nur drei Ursprüngen 5 von denen dem Volumenbild 1 entsprechend simulierte Lichtstrahlen 4 ausgehen. Die Volumenbilddarstellung im Bild ist zur Verdeutlichung hervorgehoben und entspricht nicht der Darstellung durch die drei gezeigten Projektionslichtkegel 11. Als Szene 7 dient hier ein Querschnitt des Affenkopfes 2 der Fig. 1.

Von jedem Ursprung 5 gehen mehrere Lichtstrahlen 4 in Richtung des Darstellungsraumes 3. Dort überlagern sich die Lichtstrahlen 4, wodurch sich die Intensitäten addieren. Somit entstehen hellere und dunklere Bereiche im Darstellungsraum 3, wodurch ein Volumenbild 1 einer Szene 7, hier dem Affenkopf 2 entsteht.

Die Intensität der einzelnen Lichtstrahlen 4 wird dabei so angepasst, dass durch die Überlagerung mit anderen Lichtstrahlen 4 die Intensitätsverteilung der Szene 7 widergespiegelt wird.

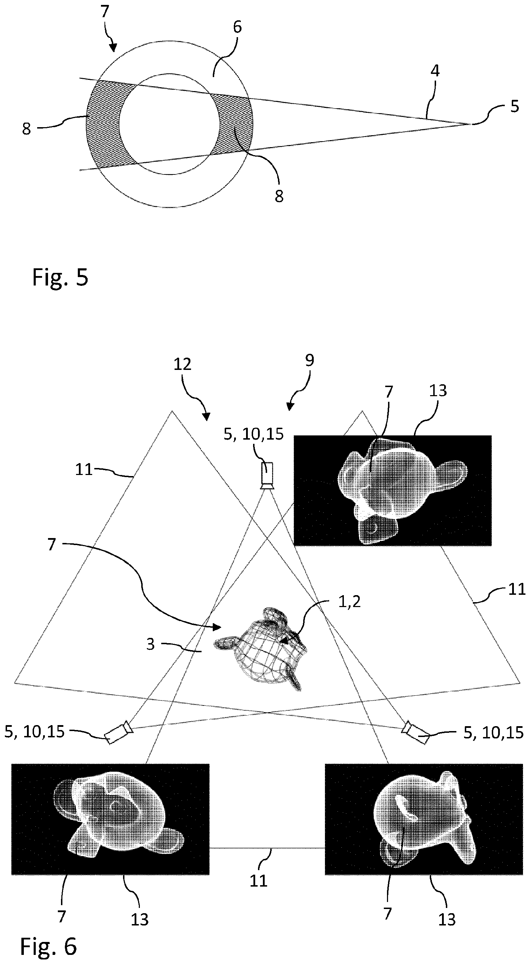

Die Fig. 5 zeigt exemplarisch einen einzelnen Lichtstrahl 4 eines Ursprungs 5, welcher eine ringförmige Szene 7 durchquert. Der Lichtstrahl 4 ist als divergentes Lichtbündel dargestellt, das heißt, er weitet sich mit zunehmendem Abstand zum Ursprung 5 auf. Im gezeigten Beispiel ist die Divergenz recht stark. In der Praxis kann die Divergenz auch geringer sein, beispielsweise bei Verwendung eines Lasers, oder durch den Einsatz von Linsen.

Das erfindungsgemäße Verfahren ist prinzipiell jedoch nicht auf divergente Lichtstrahlen 4 angewiesen oder darauf begrenzt.

Zur Bestimmung der Intensität eines Lichtstrahls 4 wird nun bestimmt, wie viel Volumen eines Objekts 6 oder mehrerer Objekte 6 der Lichtstrahl 4 in der Szene 7 durchquert und schneidet. Im Bild ist dieser Schnittbereich 8, der ein Schnittvolumen ist, dunkel markiert. Die Intensität des Lichtstrahls 4 ergibt sich nun aus dem Inhalt des Schnittbereichs 8, also der Summe der Volumeninhalte aller Schnittvolumen.

Praktisch kann die Intensität durch ein Integral über die Schnittvolumen entlang eines Lichtstrahls 4 bestimmt werden. Dabei können zusätzlich die optischen Eigenschaften des Mediums im Darstellungsraum 3 berücksichtigt werden. Die Intensitäten aller Lichtstrahlen 4, die von einem Ursprung 5 ausgehen, werden in einem Emissionsmuster 13 zusammengefasst.

Eine mögliche Gleichung zur Ermittlung der Intensität eines emittierten Lichtstrahls 4 ist ein Integral über die darzustellenden Intensitäten im Volumen der Szene 7, die der Lichtstrahl 4 durchquert und somit darstellt. Sei $i(s)$ die Intensitätsverteilung der Szene 7 entlang der zu berechnenden Strecke s ausgehend vom Ursprung 5 aus, dann könnte ein solches Integral zur Berechnung der Lichtstrahlintensität im Emissionsmuster 13 $I_E$ wie folgt aussehen.

$$I_E = \int_0^{s_{max}} i(s)\, ds$$

Hierbei ist s die Strecke des Lichtstrahls 4 gemessen vom Ursprung 5 aus und $s_{max}$ die am weitesten vom Ursprung 5 entfernte Distanz im Darstellungsraum 3.

Die Intensität einer Szene 7 muss hierbei nicht in allen Teilen gleich sein und kann variieren, so können beispielsweise Teile einer Szene 7 heller als andere sein, dies wird hier durch den Wert $i(s)$ ausgedrückt. Negative Werte von $i(s)$ sind technisch nicht darstellbar, jedoch theoretisch zur Berechnung zulässig.

Ein Emissionsmuster 13 umfasst alle, etwa auf diese Weise, berechneten Intensitäten und die entsprechenden Richtungsvektoren für die Emission der Lichtstrahlen 4.

Zur Berechnung kann der Darstellungsraum 3 auch in endliche Teilbereiche unterteilt werden, welche gleichmäßig, beispielsweise in einem Muster/Raster oder auch zufällig im Darstellungsraum 3 liegen und so die Berechnung nicht über ein Integral, sondern lediglich über die Summe der beleuchteten Teilabschnitte, etwa Voxel, Volumenbildpunkte, oder eine Punktwolke, erfolgt.

Des Weiteren können Korrekturformeln in die Berechnung eingefügt werden, um beispielsweise Lichtabfall oder Eigenschaften des Darstellungsmediums zu berücksichtigen und so die Volumenbildqualität zu verbessern.

Ein Beispiel für eine Berechnungsformel mit Korrekturen ist nachfolgend beschrieben:

$$I_E = \frac{3}{v * s_{max}} \int_0^{s_{max}} \left(i(s)\left(\frac{s}{s_{max}}\right)^2\right)ds$$

Hierbei ist die Berechnung darauf ausgelegt einen Wert zwischen 0 und 1 zu generieren (sofern i(s) Werte zwischen $\{(0,1)\}$ liefert), um einen prozentualen Helligkeitsindex unabhängig von der physischen Kapazität einer Projektionslichtquelle zu liefern. In diesem Beispiel ist das Integral mit einer Tiefenkompensation $\left(\frac{s}{s_{max}}\right)^2$ versehen, die den quadratischen Intensitätsabfall von Licht über die zurückgelegte Strecke ausgleichen soll. Um den Wertebereich von 0 bis 1 zu gewährleisten wird ein Ausgleichsfaktor $\frac{3}{s_{max}}$ benutzt. Der Ausgleichsfaktor ist der Kehrwert des maximalen Integralwertes, wenn der gesamte Darstellungsraum 3 ausgeleuchtet und mit Tiefenkompensation berechnet wird. Dieser Ausgleichsfaktor wird noch um einen Verstärkungsfaktor v ergänzt, der angibt wie viel Prozent (0-100%) des Darstellungsraumes 3 durch ein Volumenbild 1 belichtet wird, um das Bild maximal ohne Überblendung aufzuhellen. Der Verstärkungsfaktor sollte möglichst über eine gesamte Szene 7 und alle Emissionsmuster 13 konstant gewählt werden, um Bildflackern bei Bewegtbildern und Ungleichmäßigkeiten unter den Emissionsmustern 13 zu vermeiden. Durch Setzen eines zu großen Wertes von v kann es zu Überbelichtung des Emissionsmusters 13 ($I_E$>100%) kommen, was jedoch nicht zwingend das Volumenbild 1 stört oder zerstört.

Die Gleichung berücksichtigt nicht die Distanz von der Projektionslichtquelle zum Darstellungsraum 3 oder Bildartefakte durch technisch bedingte oder ungewollte Lichtstrahlenüberlagerung, oder andere denkbare Korrekturen.

Die bisher beschriebene Berechnung ist nicht farbspezifisch, sondern kann mit Licht jeder Farbe ausgeführt werden und auch mehrere Farben sind in einem Emissionsmuster 13 kombinierbar.

Weißes Licht kann zum Beispiel durch die Überlagerung von rotem, grünem und blauem Licht mit gleichen Anteilen dargestellt werden. In Teilvolumen, in denen die Überlagerung von Lichtstrahlen 4 mit bestimmter Färbung überwiegt, erscheint das projizierte Volumenbild 1 farbig.

Auf diesem Wege kann ein mehrfarbiges Volumenbild 1 erzeugt werden, in welchem Teilvolumen farbig angestrahlt werden. Das Durchqueren farbiger Lichtstrahlen 4 durch andersfarbige Teile des Volumenbildes 1 kann leichtes Abfärben verursachen, wird jedoch durch die Redundanz des Verfahrens und eventuelle Korrekturen in entsprechenden Emissionsmustern 13 minimiert.

Die Fig. 6 zeigt eine konkrete Vorrichtung 9 zur Erstellung eines Volumenbildes 1, etwa wie in Fig. 3 und 4 gezeigt, sowie eine schematische Darstellung einer Szene 7 und den zugehörigen Emissionsmustern 13 der Posen 15.

Die Vorrichtung 9 besitzt drei Projektionslichtquellen 10 als Ursprünge 5 von Lichtstrahlen 4. Jede Projektionslichtquelle 10 im Bild ist mit einem Projektionslichtkegel 11 dargestellt. Die Anzahl von drei Projektionslichtquellen 10 ist in diesem Beispiel zur einfacheren Veranschaulichung der Erfindung gewählt. Die im Bild gezeigte, als Drahtgittermodell dargestellte Szene 7, repräsentiert das zu erzeugende Volumenbild 1, jedoch nicht das tatsächliche Aussehen eines projizierten Volumenbildes 1 mit dieser Vorrichtung 9.

Jede Projektionslichtquelle 10 besitzt eine Pose 15, also eine Position innerhalb eines Raumes 12 und eine Projektionsrichtung, in die die Projektionslichtquelle 10 ausgerichtet ist.

Im Beispiel bilden die Projektionslichtquellen 10 ein Dreieck, wobei die Projektionsrichtungen jeweils auf den Mittelpunkt des Dreiecks gerichtet sind. Der Schnittbereich der Projektionslichtkegel 11 bildet den Darstellungsraum 3, welcher im Raum 12 liegt und ein Teil dessen ist.

Jeder Pose 15 und somit Projektionslichtquelle 10 ist ein Emissionsmuster 13 zugeordnet. Ein Emissionsmuster 13 ist eine zweidimensionale Intensitätsverteilung der dargestellten Szene 7 aus der Perspektive der Pose 15 der zugeordneten Projektionslichtquelle 10.

Wie im Beispiel zu sehen ist, unterscheiden sich die Emissionsmuster 13 der Projektionslichtquellen 10. Die Projektionen der Emissionsmuster 13 überlagern sich im Darstellungsraum 3 so, dass ein dreidimensionales Volumenbild 1 der Szene 7 entsteht.

Ein Emissionsmuster 13 ist somit eine zweidimensionale Intensitätsverteilung der Szene 7 perspektivisch aus der Pose 15 der Projektionslichtquelle 10 betrachtet. Die Emissionsmuster 13 entsprechen den Posen 15 zur Darstellung des gezeigten Volumenbildes 1.

Eine Projektionslichtquelle 10 im Beispiel kann etwa ein Videoprojektor sein, der das Emissionsmuster 13 als darzustellendes Bild erhält.

Eine Projektionslichtquelle 10 kann auch ein richtungsbeweglicher Laser sein, der sich durch die belichteten Teile des Emissionsmusters 13 bewegt und durch Veränderung seiner Intensität oder Geschwindigkeit, also Belichtungsdauer, das Emissionsmuster 13 darstellt.

Auch sind an Stelle der Projektionslichtquellen 10 simulierte, virtuelle Projektionslichtquellen 10 möglich.

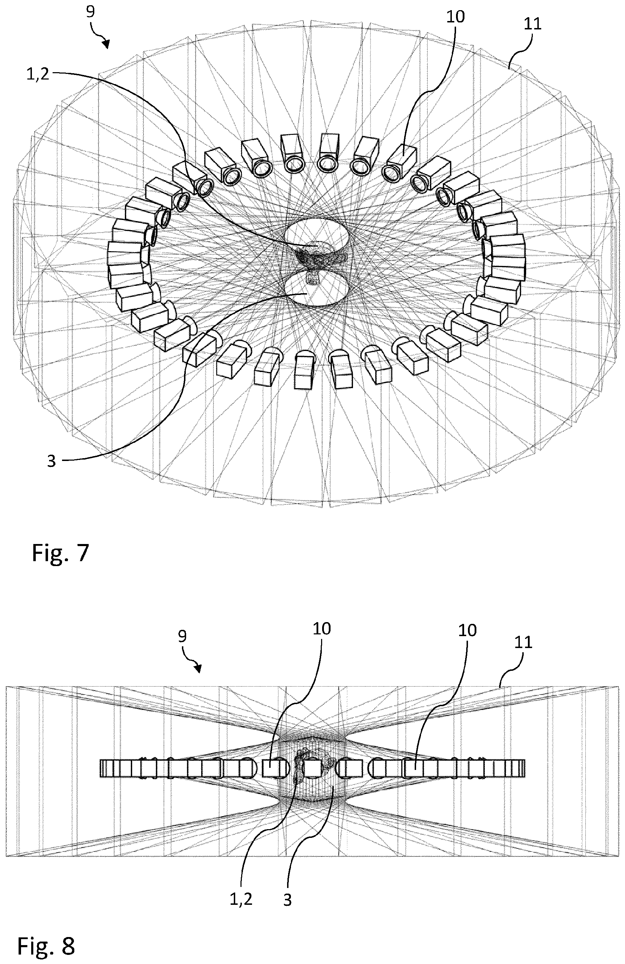

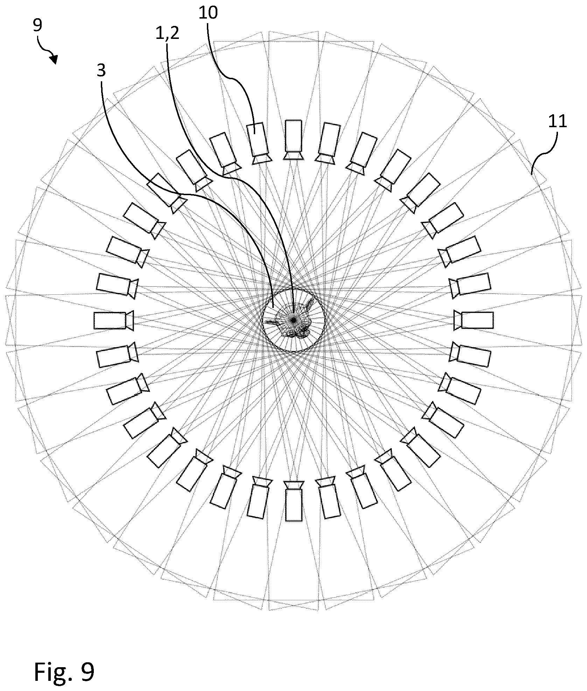

Die Figuren 7 bis 23 zeigen weitere Ausführungsbeispiele für erfindungsgemäße Vorrichtungen 9 zur erfindungsgemäßen Projektion von Volumenbildern 1. Hierbei sind jeweils gleiche Merkmale mit gleichen Bezugszeichen versehen und im Wesentlichen nur die Unterschiede zu der Vorrichtung 9 der Fig. 6 beschrieben. Alle in Bezug auf die Fig. 6 beschriebenen Merkmale, insbesondere die Ausgestaltung der Projektionslichtquellen 10, sind uneingeschränkt auf alle nachfolgend beschriebenen Ausführungen übertragbar.

Die Figuren 7 bis 9 zeigen eine Ausführung einer Vorrichtung 9, etwa wie in Fig. 1 und 2 gezeigt, mit 32 Projektionslichtquellen 10, die gleichmäßig auf einem ebenen Kreis angeordnet sind, wobei die Projektionsrichtung jeder Projektionslichtquelle 10 auf den Kreismittelpunkt ausgerichtet ist. Um den Kreismittelpunkt ist somit ein Darstellungsraum 3 gebildet, in dem sich die Projektionslichtkegel 11 aller Projektionslichtquellen 10 überschneiden.

Im Beispiel ist als Szene 7 hier wieder der Affenkopf 2 dargestellt. Durch die große Anzahl an Projektionslichtquellen 10 ist eine gute räumliche Auflösung gegeben, so dass das Volumenbild 1 aus allen Betrachtungsrichtungen gut und detailreich erkennbar ist. Hierbei kann es hilfreich sein, wenn ein isotropes Darstellungsmedium verwendet wird und/oder wenn das Darstellungsmedium gleichmäßig im Darstellungsraum 3 verteilt angeordnet ist.

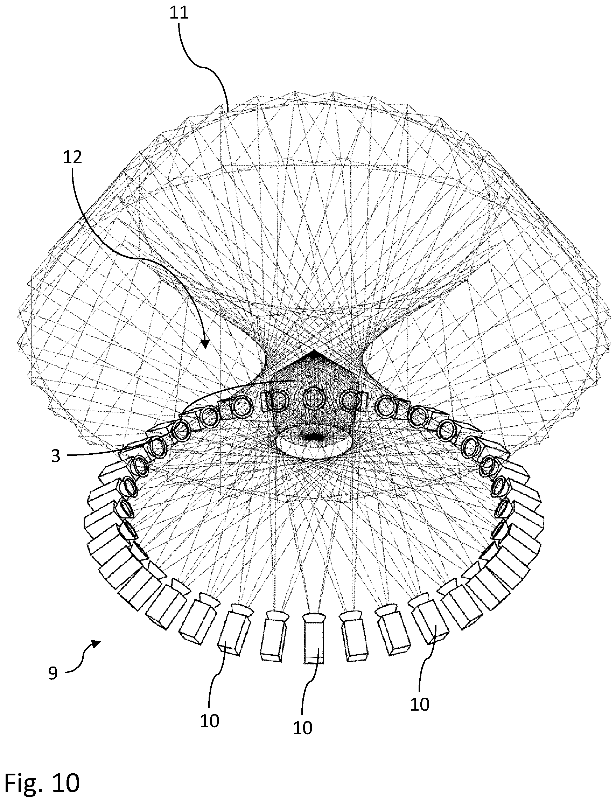

Die Fig. 10 zeigt eine Vorrichtung 9, die im Wesentlichen der Fig. 7 entspricht. Hier sind die Projektionsrichtungen der einzelnen Projektionslichtquellen 10 auf einen Punkt auf der Kreismittelachse außerhalb der Kreisebene gerichtet. Somit steht der Darstellungsraum 3 über oder unterhalb der Kreisebene. Dies ermöglicht beispielsweise die Anordnung der Projektionslichtquellen 10 in der Decke oder dem Boden eines Raumes 12, oder der Oberfläche eines Tisches, wobei der Darstellungsraum 3 des Volumenbildes 1 innerhalb des Raumes 12 liegt.

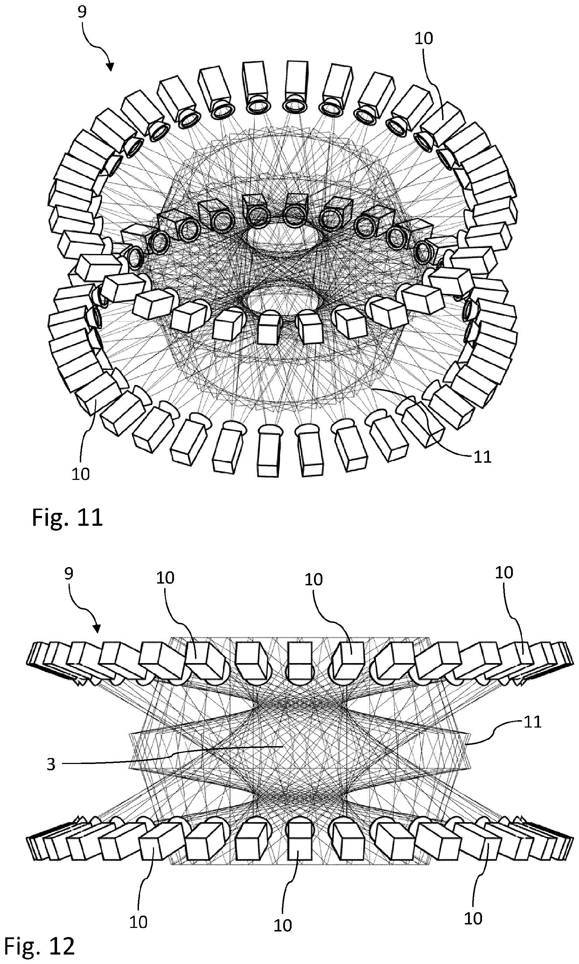

Die Figuren 11 und 12 zeigen eine Vorrichtung 9 ähnlich der Fig. 10. Hier sind jedoch zwei Kreise mit jeweils 32 Projektionslichtquellen 10 vorhanden, die parallel zueinander und voneinander beabstandet angeordnet sind. Die Projektionsrichtungen der Projektionslichtquellen 10 sind dabei jeweils auf einen Punkt auf der Kreismittelachse zwischen den beiden Kreisen ausgerichtet. Vorzugsweise in der Mitte zwischen den beiden Kreisen. Vorteil dieser Vorrichtung 9 ist die durch die Symmetrie gegebene Gegenläufigkeit der Projektionslichtkegel 11. Der Darstellungsraum 3 liegt auch hier im Schnittbereich der Projektionslichtkegel 11.

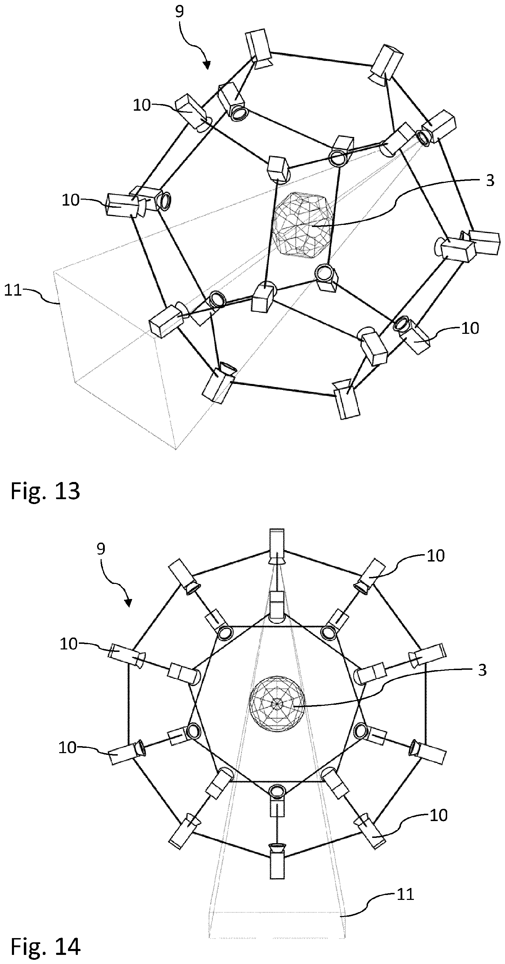

Die Figuren 13 und 14 zeigen eine Vorrichtung 9 mit 20 Projektionslichtquellen 10, die in den Ecken eines Dodekaeders angeordnet sind, wobei die Projektionsrichtungen der einzelnen Projektionslichtquellen 10 auf den Mittelpunkt des Dodekaeders ausgerichtet sind. Der Darstellungsraum 3 ist durch die Überschneidung der Projektionslichtkegel 11 um den Mittelpunkt gebildet, wobei zur Übersicht nur ein Projektionslichtkegel 11 eingezeichnet ist. Vorteil dieser Vorrichtung 9 ist eine besonders gleichmäßige Verteilung der Projektionslichtquellen 10, bei verhältnismäßig geringer Anzahl.

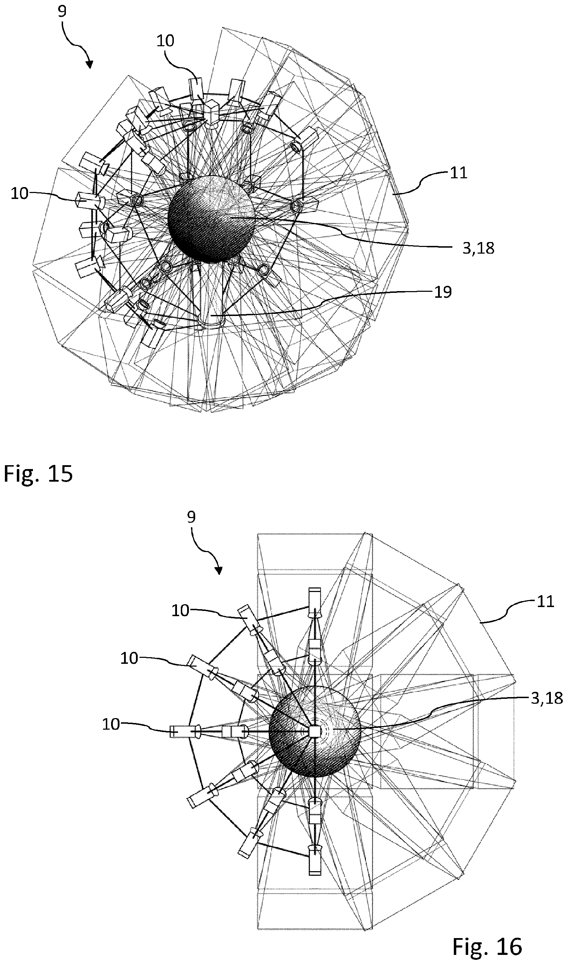

Die Figuren 15 und 16 zeigen eine Vorrichtung 9 mit 29 Projektionslichtquellen 10, die etwa halbkugelförmig angeordnet sind, wobei die Projektionsrichtungen der Projektionslichtquellen 10 auf den Kugelmittelpunkt ausgerichtet sind. Als Darstellungsraum 3 ist hier eine Kugel 18 aus einem festen Darstellungsmedium in dem Kugelmittelpunkt angeordnet. Die Kugel 18 ist auf einer Standsäule 19 angeordnet.

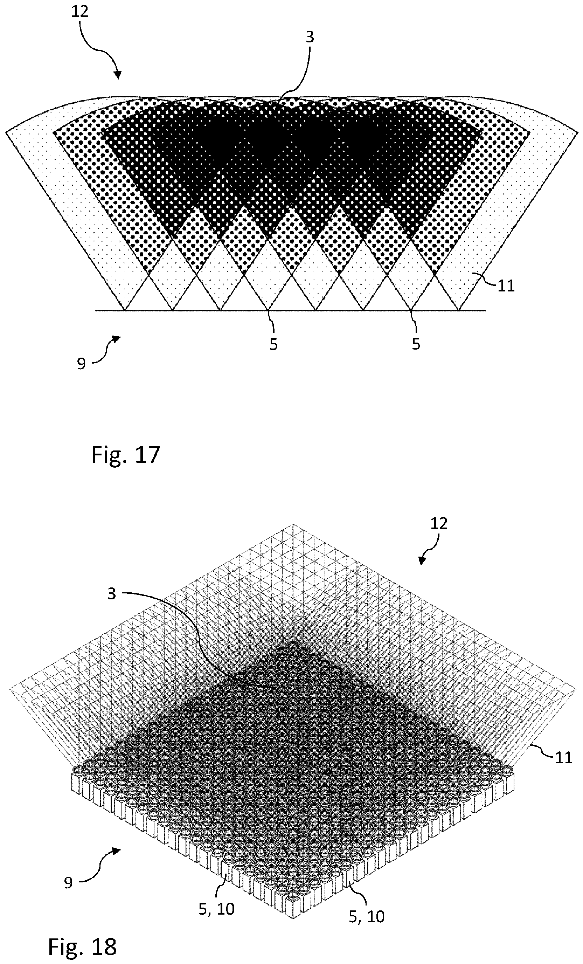

Die Fig. 17 zeigt eine Vorrichtung 9 mit mehreren Ursprüngen 5, die eben, in einer Reihe angeordnet sind und eine schematische Darstellung ihrer Projektionslichtkegel 11. Der Darstellungsraum 3 ist im Überlappungsbereich der Projektionslichtkegel 11 gebildet, wobei deutlich wird, dass der Darstellungsraum 3 nicht immer durch alle Projektionslichtkegel 11 vollständig beleuchtet werden muss. Im Beispiel dieser Vorrichtung 9 könnte ein Darstellungsraum 3 im Überlappungsbereich von vier oder mehr Projektionslichtkegeln 11 liegen, wodurch die Vorrichtung 9 horizontal erweiterbar ist und große ebene Darstellungsräume 3 ermöglicht. Eine solche Vorrichtung 9 kann etwa in einer Wand, einer Decke oder einem Boden eines Raumes 12, oder der Oberfläche eines Tisches angeordnet sein.

Die Fig. 18 zeigt eine Vorrichtung 9 ähnlich der Fig. 17 mit insgesamt 441 Projektionslichtquellen 10 als Ursprünge 5, die in einer 21×21 Matrix eben angeordnet sind. Eine solche Vorrichtung 9 kann etwa in einer Wand, einer Decke oder einem Boden eines Raumes 12, oder der Oberfläche eines Tisches angeordnet sein.

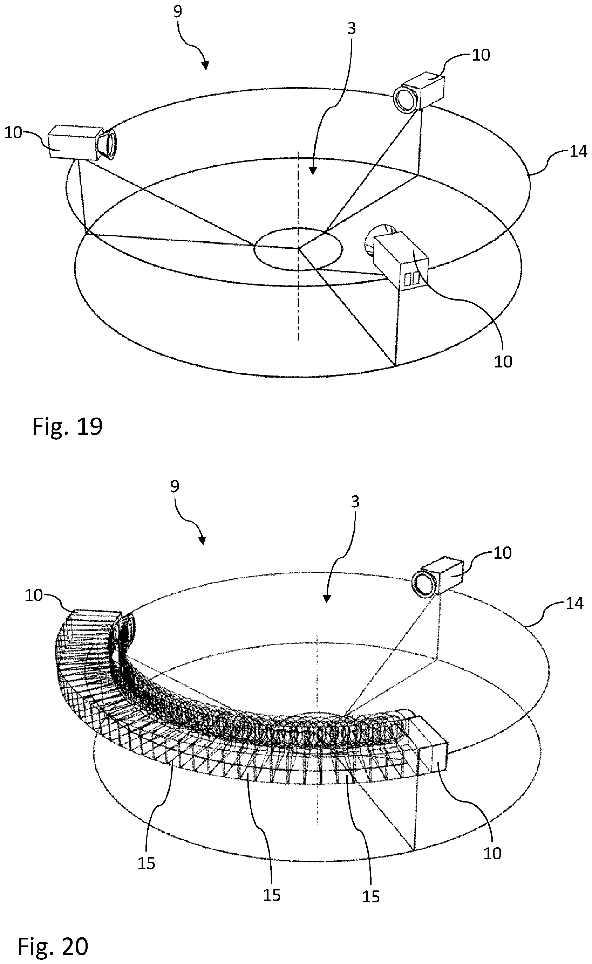

Die Figuren 19 und 20 zeigen eine Vorrichtung 9 mit drei Projektionslichtquellen 10, die wie in der Fig. 7 gleichmäßig verteilt auf einem Kreis angeordnet sind. Die Projektionsrichtung ist jeweils auf den Kreismittelpunkt ausgerichtet. Die Projektionslichtquellen 10 sind hier jedoch auf einem Drehgestell 14 montiert, das als kreisförmiges Karussell mit U Querschnitt ausgebildet sein kann und das um den Kreismittelpunkt rotiert werden kann. Das Drehgestell 14 ist dazu ausgebildet, den Darstellungsraum 3 nicht zu stören.

Wie in Fig. 20 angedeutet, kann eine Projek-

**EP 4 510 560 A1**

tionslichtquelle 10 durch Drehung des Drehgestells 14 in eine andere Pose 15 überführt werden. Somit ist nicht in jeder Pose 15 eine Projektionslichtquelle 10 angeordnet, sondern eine Projektionslichtquelle 10 ist in diese bewegbar. Eine Pose 15 kann auch von mehreren Projektionslichtquellen 10 eingenommen werden. In der Fig. 20 sind viele Posen 15 angedeutet, wodurch verdeutlicht wird, dass prinzipiell die Anzahl und der Abstand zwischen den Posen 15 nicht limitiert durch beispielsweise die physische Größe der realen Projektionslichtquellen 10 ist. Auch hier ist für jede Pose 15 ein spezifisches Emissionsmuster 13 notwendig, so dass in dieser Ausführung die Projektionslichtquelle 10 so ausgebildet ist, dass ihr Emissionsmuster 13 veränderbar ist.

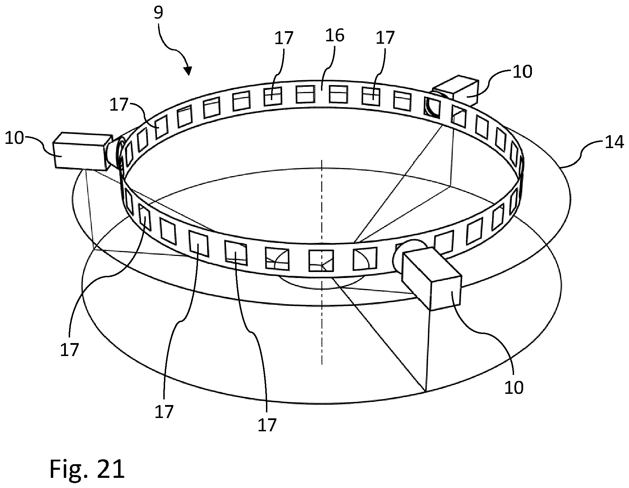

Die Vorrichtung 9 der Fig. 21 ähnelt der Fig. 19, wobei hier jedoch koaxial innerhalb der Projektionslichtquellen 10 ein feststehender Blendenring 16 angeordnet ist. Dieser Blendenring 16 weist einzelne Blendenöffnungen 17 auf. Wie bereits in der Ausführung der Fig. 20 werden die Projektionslichtquellen 10 in verschiedene Posen 15 bewegt, durch Drehung des Drehgestells 14. Jeder Pose 15 ist ein Emissionsmuster 13 zugeordnet, weshalb beim Wechsel von einer Pose 15 zur nächsten Pose 15 auch das Emissionsmuster 13 geändert werden muss. Hierbei können unerwünschte Bildartefakte entstehen, die beispielsweise durch Ausschalten der Projektionslichtquelle während dem Posen- und Emissionsmusterwechsel verhindert werden können.

Der Blendenring 16 hat nun die Funktion, dass der Wechsel der Emissionsmuster 13 zwischen den Posen 15 dann erfolgen kann, wenn die Projektionslichtquelle 10 sich zwischen zwei Blendenöffnungen 17 befindet. Der Blendenring 16 bietet somit eine Dunkelphase zum Wechsel des Emissionsmusters 13 zwischen zwei Posen 15 an. Auf diese Weise können die Projektionslichtquellen 10 dauerhaft betrieben werden, wodurch deren Leuchtmittel weniger beansprucht sind und somit die Lebensdauer wesentlich verlängert wird. Des Weiteren garantiert ein Blendenring 16 die genaue Positionierung der Projektionslichtquellen 10 in den Posen 15 auch bei hohen Drehgeschwindigkeiten.

Die Lichtstrahlen 4 einer Projektionslichtquelle 10 gelangen also nur dann in den Darstellungsraum 3, wenn sich diese hinter einer Blendenöffnung 17 befindet. Die Blendenöffnung 17 kann hierbei auch ein vertikaler Schlitz sein, der recht schmal ist. Da die Projektionslichtquelle 10 an der Blendenöffnung 17 vorbeibewegt wird, wird dennoch das gesamte Emissionsmuster 13 in den Darstellungsraum 3 projiziert.

Das Bewegen in die Pose 15 sollte dabei nur geringe Bildartefakte auslösen, da bei kleiner Blendengröße die Winkeldifferenz sehr gering ist und somit technisch keinen Einfluss auf das Bild hat. Da die Projektionslichtquelle sich komplett an der Blendenöffnung 17 vorbeibewegt, wird jeder Teil des Emissionsmusters 13 gleich lang "belichtet" oder projiziert.

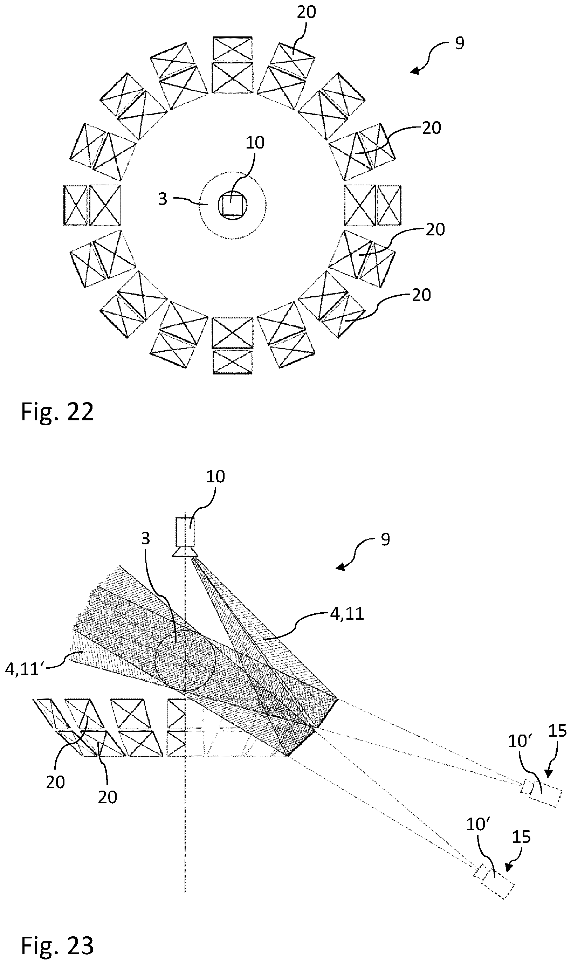

Die Fig. 22 und 23 zeigen eine weitere Vorrichtung 9 zur Projektion eines Volumenbildes 1 gemäß der Erfindung. Diese Ausführung weist eine Projektionslichtquelle 10 und 32 Spiegel 20 auf. Die Spiegel 20 sind ebene, plane Spiegel 20, die das Licht nicht bündeln wie etwa Parabolspiegel.

Die Spiegel 20 sind gleichmäßig verteilt in zwei übereinander liegenden Kreisen mit jeweils 16 Spiegeln 20 angeordnet, wobei sich die Spiegel 20 der beiden Kreise jeweils an einer Kante berühren. Die Spiegel 20 sind so angeordnet, dass die jeweiligen Spiegelmitten Lichtstrahlen 4 der Projektionslichtquelle 10 auf einen gemeinsamen Mittelpunkt hin spiegeln, um den der Darstellungsraum 3 gebildet wird.

Die Projektionslichtquelle 10 ist in Bezug auf eine Ebene, die durch einen Kreis aus Spiegeln 20 gebildet ist, senkrecht über dem Mittelpunkt angeordnet. Der gesamte Projektionslichtkegel 11 der Projektionslichtquelle 10 deckt vorzugsweise alle Spiegel 20 ab und unterteilt sich logisch in 32, jeweils einem Spiegel 20 zugehörenden, Projektionslichtkegel 11. Die Spiegel 20 sind also zur Winkelhalbierenden zwischen Projektionslichtquelle 10 und der Mitte des Darstellungsraumes 3 ausgerichtet. Des Weiteren haben die Spiegel 20 eine an ihren Projektionslichtkegel 11 angepasste Größe, wodurch der reflektierte Projektionslichtkegel 11' das gesamte Volumen des Darstellungsraumes 3 durchdringt.

Die Spiegel 20 bilden jeweils eine virtuelle Projektionslichtquelle mit einer Pose 15. Die Vorrichtung 9 besitzt demnach 32 virtuelle Projektionslichtquellen 10'. Zur besseren Veranschaulichung sind in der Fig. 23 zwei virtuelle Projektionslichtquellen 10' gestrichelt eingezeichnet, die die Posen 15 der Projektionslichtquellen 10 darstellen, die durch die beiden Spiegel 20 gebildet werden, an denen die Projektionslichtkegel 11 gezeichnet sind.

Durch die Verwendung von Spiegeln 20 kann daher sichtbar Platz eingespart werden. Zudem können Kosten gespart werden, da ein Spiegel 20 normalerweise kostengünstiger ist als eine reale Projektionslichtquelle. Die Auflösung einer solchen Anordnung kann jedoch reduziert sein, wenn eine Projektionslichtquelle alle Emissionsmuster 13 vereint. Dabei kann ein Emissionsmuster 13 an der Projektionslichtquelle 10 angeordnet sein, etwa durch eine Maske. Alternativ kann die Projektionslichtquelle 10 beispielsweise auch ein Videoprojektor sein. Es könnte aber auch an jedem Spiegel 20 eine Maske, die ein Emissionsmuster 13 enthält, vorhanden sein.

Alle hier gezeigten Ausführungen dienen lediglich zur Veranschaulichung der Erfindung. Die Ausführungsbeispiele sind dabei in keiner Weise einschränkend oder limitierend zu verstehen. Neben den gezeigten Ausführungen sind zahlreiche andere Ausführungen möglich, die sich in der Art, Anzahl und/oder der Anordnung der Projektionslichtquellen 10 unterscheiden können, sowie Art und Form von Darstellungsräumen 3 und Darstellungsmedien.

Es ist auch denkbar, verschiedene Technologien für Projektionslichtquellen 10 zu verbinden. Etwa könnten als Projektionslichtquellen 10 weiße Lampen mit farbigen Lasern gemischt werden, um beispielsweise farbige Effekte in einem weißen Volumenbild 1 zu erzeugen.

Bezugszeichenliste

1 Volumenbild
2 Affenkopf
3 Darstellungsraum
4 Lichtstrahl
5 Ursprung
6 Objekt
7 Szene
8 Schnittbereich
9 Vorrichtung
10 Projektionslichtquelle
11 Projektionslichtkegel
12 Raum
13 Emissionsmuster
14 Drehgestell
15 Pose
16 Blendenring
17 Blendenöffnung
18 Kugel
19 Standsäule
20 Spiegel

**Patentansprüche**

1. Verfahren zur räumlichen Darstellung eines ganzheitlich, momentan und sofortig sichtbaren Volumenbildes (1) einer Szene (7), durch Variation der Lichtdichte in einem Darstellungsraum (3), wobei der Darstellungsraum (3) ein Darstellungsmedium aufweist, wobei die Variation der Lichtdichte durch Überlagerung von mehreren Lichtstrahlen (4) erzeugt wird und wobei die Lichtstrahlen (4) von wenigstens drei unterschiedlichen Ursprüngen (5) ausgehen.

2. Verfahren nach Anspruch 1, **dadurch gekennzeichnet, dass** die Überlagerung der Lichtstrahlen (4) im Darstellungsraum (3) eine räumliche Intensitätsverteilung aufweist, die im Wesentlichen der Intensitätsverteilung der darzustellenden Szene (7) entspricht.

3. Verfahren nach einem der Ansprüche 1 oder 2, **dadurch gekennzeichnet, dass** Volumenbereiche (8), also Teilbereiche einer Szene (7) unterschiedliche Intensitäten und somit unterschiedliche Helligkeiten bei gleichem Volumen innerhalb einer Szene (7) aufweisen können.

4. Verfahren nach einem der vorangehenden Ansprüche, **dadurch gekennzeichnet, dass** zum Erzeugen der Variation der Lichtdichte aus wenigstens drei unterschiedlichen Posen (15) jeweils ein Emissionsmuster (13) in den Darstellungsraum (3) projiziert wird, so dass sich einzelne Lichtstrahlen (4) der Emissionsmuster (13) im Darstellungsraum (3) überlagern und/oder dass pro Volumenbild (1) jeder Pose (15) ein Emissionsmuster (13) zugeordnet ist.

5. Verfahren nach Anspruch 4, **dadurch gekennzeichnet, dass** jeder Pose (15) eine, oder mehrere Projektionslichtquellen (10) zugeordnet sind, insbesondere wobei eine Projektionslichtquelle (10) im Ursprung (5) der Pose (15) angeordnet, in die Pose (15) bewegbar, oder in der Pose (15), durch Spiegel (20) oder andere optische Elemente, simuliert ist.

6. Verfahren nach einem der Ansprüche 4 oder 5, **dadurch gekennzeichnet, dass** für jede Pose (15) ein Emissionsmuster (13) erstellt wird, wobei zur Erstellung eines Emissionsmusters (13) die möglichen Lichtstrahlen (4), welche aus einer Pose (15) resultieren können, betrachtet werden und für jeden solchen Lichtstrahl (4) eine Intensität berechnet wird, so dass die Überlagerung der einzelnen Lichtstrahlen (4) der Emissionsmuster (13) aller Posen (15) der Intensitätsverteilung der Szene (7) entspricht und diese Intensitäts-Informationen in einem zweidimensionalen Muster gespeichert werden können.

7. Verfahren nach Anspruch 6, **dadurch gekennzeichnet, dass** zur Berechnung der Intensität eines Lichtstrahls (4) ein Integral über die vom Lichtstrahl (4) geschnittenen Volumenbereiche (8) einer Szene (7) entlang des Lichtpfades gebildet wird, oder dass bei der Berechnung der Intensität eines Lichtstrahls (4) eine Summe über die vom Lichtstrahl (4) abgedeckten Volumenbildpunkte oder Teilbereiche einer beispielsweise als Punktwolke oder Voxel beschriebenen Szene (7) entlang des Lichtpfades gebildet wird.

8. Verfahren nach einem der Ansprüche 4 bis 7, **dadurch gekennzeichnet, dass** zur Erstellung eines Emissionsmusters (13) das Emissionsmuster (13) in Bildpunkte unterteilt wird und jedem Bildpunkt ein Lichtstrahl (4) zugeordnet wird und/oder dass die Erstellung der Emissionsmuster (13) sequenziell und unabhängig, oder simultan über alle oder Gruppen an Posen (15) gleichzeitig und interdependent erfolgt.

9. Verfahren nach einem der Ansprüche 6 bis 8, **dadurch gekennzeichnet, dass** bei der Berechnung der Intensität eines Lichtstrahls (4) eine Tiefenkompensation erfolgt, insbesondere wobei zur Berechnung der Intensität für jeden Lichtstrahl (4) die Distanz der Projektionslichtquelle (10) zum weit entferntesten Punkt des Lichtstrahls (4) im Darstellungsraum (3), die Intensität des Volumenbildpunktes oder Volumens im Darstellungsraum (3), die Distanz des Volumenbildpunktes oder Volumens zur Projektionslichtquelle (10), und/oder eine optische Eigenschaft des Darstellungsmediums, beispielsweise die Absorption oder der Brechungsindex, berücksichtigt wird.

10. Verfahren nach einem der vorangehenden Ansprüche, **dadurch gekennzeichnet, dass** das Darstellungsmedium ein semitransparentes Medium ist, welches zur Reflexion oder Streuung der Lichtstrahlen (4) ausgebildet ist, insbesondere wobei das Darstellungsmedium reflektive und/oder refraktive Eigenschaften aufweist und/oder dass das Darstellungsmedium reflektive und/oder refraktive Partikel aufweist, vorzugsweise eine Dispersion, insbesondere ein Aerosol, eine Emulsion oder Suspension ist und/oder dass der Darstellungsraum (3) frei in einem umgebenden Raum (12) ausgebildet ist oder als begrenztes Volumen ausgebildet ist.

11. Verfahren nach einem der vorangehenden Ansprüche, **dadurch gekennzeichnet, dass** eine Projektionslichtquelle (10) eine gerichtete, vorzugsweise richtungsbewegliche und/oder intensitätsveränderliche Lichtquelle, insbesondere einen Laser, oder eine Punktlichtquelle und eine Bildmaske aufweist, beispielsweise einen Diaprojektor oder Videoprojektor, ein oder mehrere, feste oder bewegliche, reflektive und/oder refraktive optische Elemente, vorzugsweise Spiegel (20), zur Änderung oder Simulierung neuer virtueller Posen (15) aufweist und/oder dass eine Projektionslichtquelle (10) durch Bewegung im Raum (12) zur Änderung der Pose (15) ausgebildet ist.

12. Vorrichtung (9) zur Projektion eines ganzheitlich, momentan und sofortig sichtbaren Volumenbildes (1) einer Szene (7), insbesondere gemäß einem Verfahren nach den Ansprüchen 1 bis 11, aufweisend:

   einen Darstellungsraum (3), der ein Darstellungsmedium aufweist,
   wenigstens drei Projektionslichtquellen (10), die um oder am Darstellungsraum (3), insbesondere gleichmäßig verteilt, angeordnet sind, und auf den Darstellungsraum (3) ausgerichtet sind, wobei jeder Projektionslichtquelle (10) mindestens eine Pose (15) zugeordnet ist.

13. Vorrichtung (9) nach Anspruch 12, **dadurch gekennzeichnet, dass** die Projektionslichtquellen (10) kreisförmig, in einer Ebene oder mehreren Ebenen, kugelförmig oder teilkugelförmig, in einer oder mehreren Schichten um den Darstellungsraum (3) angeordnet sind und/oder dass die Projektionslichtquellen (10) auf einem zur Rotation ausgebildeten Drehgestell (14) angeordnet sind, welches sich vorzugsweise um den Darstellungsraum (3) dreht und vorzugsweise nicht in diesen eindringt oder stört.

14. Vorrichtung (9) nach Anspruch 12 oder 13, **dadurch gekennzeichnet, dass** eine Projektionslichtquelle (10) eine gerichtete, vorzugsweise richtungsbewegliche und/oder intensitätsveränderliche Lichtquelle, insbesondere einen Laser, oder eine Punktlichtquelle und eine Bildmaske aufweist, beispielsweise einen Diaprojektor oder Videoprojektor, ein oder mehrere, feste oder bewegliche, reflektive und/oder refraktive optische Elemente, vorzugsweise Spiegel (20) zur Änderung oder Simulierung neuer virtueller Posen (15) aufweist und/oder dass eine Projektionslichtquelle (10) durch Bewegung im Raum (12) zur Änderung der Pose (15) ausgebildet ist.

15. Vorrichtung (9) nach einem der Ansprüche 12 bis 14, **dadurch gekennzeichnet, dass** bei beweglichen Projektionslichtquellen (10), feststehende Blenden oder andere Lichtabschirmungen zur genauen Positionierung der Projektionslichtquellen (10) in Posen (15) benutzt werden und/oder dass die Vorrichtung (9) mehr als 20 Projektionslichtquellen (10), besonders vorzugsweise mehr als 60 Projektionslichtquellen (10) aufweist.

Fig. 1

Fig. 2

Fig. 3

Fig. 4

**Fig. 5**

**Fig. 6**

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

20

9

10

3

Fig. 22

10

3

9

4,11

4,11'

20

20

10'    15

10'    15

Fig. 23

Europäisches
Patentamt

European
Patent Office

Office européen
des brevets

# EUROPÄISCHER RECHERCHENBERICHT

Nummer der Anmeldung

EP 23 19 2173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YAGI ASUKA ET AL: "360-degree fog projection interactive display", SIGGRAPH ASIA 2013 COMPUTER ANIMATION FESTIVAL, ACM, 2 PENN PLAZA, SUITE 701 NEW YORK NY 10121-0701 USA, 12. Dezember 2011 (2011-12-12), Seite 1, XP059156660, DOI: 10.1145/2073370.2073388 ISBN: 978-1-4503-2633-9 | 1,3-5,8, 10-12,14 | INV. H04N13/39 |
| A | * Absätze [0001], [0002]; Abbildungen 1, 2, 3 * | 2,6,7,9, 13,15 | |
| | ----- | | |
| X | GB 2 497 612 A (KONG LIANG [CN]) 19. Juni 2013 (2013-06-19) | 1,2,10, 12,15 | |
| A | * Seite 8, Zeile 33 - Seite 9, Zeile 34 * * Seite 2, Zeile 25 - Zeile 29 * * Seite 10, Zeile 24 - Seite 11, Zeile 3 * | 3-9,11, 13,14 | |
| | ----- | | |
| X | WO 2012/105830 A1 (VAN DER ES WESSEL [NL]) 9. August 2012 (2012-08-09) | 1,2,4-6, 9,10,12, 13,15 | RECHERCHIERTE SACHGEBIETE (IPC) |
| Y | * Zusammenfassung; Abbildungen 2, 9, 10 * | 7 | H04N |
| A | * Seite 2, Zeile 1 - Zeile 17 * * Seite 8, Zeile 4 - Zeile 13 * * Seite 11, Zeile 31 - Seite 12, Zeile 18 * * Seite 7, Zeile 16 - Zeile 20 * | 3,8,11, 14 | |
| | ----- | | |
| Y | US 2012/194649 A1 (JAVIDI BAHRAM [US] ET AL) 2. August 2012 (2012-08-02) | 7 | |
| A | * Absatz [0036] * | 1-6,8-15 | |
| | ----- | | |

Der vorliegende Recherchenbericht wurde für alle Patentansprüche erstellt

| Recherchenort | Abschlußdatum der Recherche | Prüfer |
|---|---|---|
| München | 17. Januar 2024 | Prange, Stefan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 2173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2024

| Im Recherchenbericht angeführtes Patentdokument | Datum der Veröffentlichung | Mitglied(er) der Patentfamilie | Datum der Veröffentlichung |
|---|---|---|---|
| GB 2497612 A | 19-06-2013 | AU 2012364555 A1 | 21-08-2014 |
| | | CA 2870743 A1 | 11-07-2013 |
| | | CN 103460129 A | 18-12-2013 |
| | | EP 2800998 A1 | 12-11-2014 |
| | | GB 2497612 A | 19-06-2013 |
| | | GB 2498184 A | 10-07-2013 |
| | | JP 6165170 B2 | 19-07-2017 |
| | | JP 2015513232 A | 30-04-2015 |
| | | KR 20140116880 A | 06-10-2014 |
| | | NZ 627904 A | 31-07-2015 |
| | | RU 2014129282 A | 20-02-2016 |
| | | SG 11201403620U A | 30-10-2014 |
| | | US 2014327747 A1 | 06-11-2014 |
| | | US 2017085868 A1 | 23-03-2017 |
| | | WO 2013102398 A1 | 11-07-2013 |
| WO 2012105830 A1 | 09-08-2012 | NL 2006111 C2 | 02-08-2012 |
| | | WO 2012105830 A1 | 09-08-2012 |
| US 2012194649 A1 | 02-08-2012 | KEINE | |

EPO FORM P0461

Für nähere Einzelheiten zu diesem Anhang : siehe Amtsblatt des Europäischen Patentamts, Nr.12/82